# EUROPÄISCHE PATENTSCHRIFT

(11) **EP 0 889 655 B1**
(45) Veröffentlichungstag und Bekanntmachung des Hinweises auf die Patenterteilung: **16.07.2008**
(21) Anmeldenummer: 98201816.0
(22) Anmeldetag: 02.06.1998
(51) Int. Cl.: H04N 7/52

(54) **Digitaler Daten-Kodierer und Verfahren zur Datenkodierung**
Digital data encoder and method for encoding data
Codeur de données numériques et méthode de codage de données

(30) Priorität: 07.06.1997 DE 19724077
(43) Veröffentlichungstag der Anmeldung: 07.01.1999
(73) Patentinhaber: NXP B.V., 5656 AG Eindhoven (NL)
(72) Erfinder: Gutsmann, Rolf-Dieter, 22335 Hamburg (DE); Hackmann, Hartmut, 22335 Hamburg (DE); Rennert, Jens, 22335 Hamburg (DE)
(74) Vertreter: von Laue, Hanns-Ulrich

(56) Entgegenhaltungen:
- EP-A- 0 529 144
- EP-A- 0 854 648
- WO-A-93/09617
- WO-A-97/01930
- WO-A-98/05167

## Beschreibung

Die Erfindung bezieht sich auf einen digitalen Daten-Kodierer zur Kodierung von digitalen Daten beliebiger Datenrate wenigstens eines Datensignals zur gemeinsamen Übertragung der kodierten Daten mit einem digitalen Bildsignal.

Zusammen mit analogen Fernsehsignalen werden für verschiedene Zwecke Zusatzdaten übertragen. Hierbei kann es sich beispielsweise um Teletext-Daten handeln, die in bestimmten Bildzeilen des Fernsehsignals übertragen werden. In jüngerer Zeit werden zusätzlich z.B. Datenbits zur Signalisierung des Formates des Fernsehsignals (4:3 oder 16:9) übertragen. International werden verschiedene Datenformate mit verschiedenen Datenraten und verschiedenen Bandbreiten in jeweils vorgegebenen Bildzeilen des Fernsehsignals übertragen.

Es besteht gegebenenfalls der Wunsch, derartige Daten, die in einem digitalen Bildsignal normalerweise nicht enthalten sind, in dieses einzufügen, um sie beispielsweise einem digitalen Encoder, der das digitale Bildsignal in ein analoges Bildsignal übersetzt, zur Verfügung zu stellen. Dafür sind die in der analogen Welt geltenden Gesetze bezüglich Bandbreitenbeschränkung, Form der Signale, Takt der Signale usw. nach Umsetzung des Datensignals in ein analoges Signal einzuhalten. Diese Gesetze können jedoch für die verschiedenen Datenarten verschieden sein.

Bekannte, für diesen Zweck vorgesehene Daten-Kodierer, kämpfen mit dem Problem, daß sie nicht auf verschiedene Datenraten und Datenformate umschaltbar sind. Es muß daher für die verschiedenen Datenformate jeweils ein individueller Daten-Encoder vorgesehen sein. Für gegebenenfalls in digitales Bildsignal einzufügende Datensignale verschiedener Formate ist daher eine Vielzahl von Daten-Encodern vorzusehen.

Aus EP-A-0 529 144 ist ein "Far-end echo-canceller" bekannt, der zur Bandbereitenbegrenzung "Pulse Shaping Filter" eingesetzt werden.

Aus WO 93/09617 A ist ein Zeitmultiplex-Kommunikationssystem bekannt, in welchem Bits mittels eines Pulsformer geformt werden.

Es ist Aufgabe der Erfindung, einen Daten-Kodierer anzugeben, der es bei möglichst wirtschaftlichem Aufbau gestattet, Daten verschiedener Formate, Bandbreiten und Taktraten in ein digitales Bildsignal, das einer vorgegebenen Bandbreitenbegrenzung genügt, einzufügen.

Diese Aufgabe wird mittels der Merkmale des Patentanspruchs 1 gelöst.

Vor der Einfügung der Daten in das digitale Bildsignal werden deren Flanken bzw. die Flanken der Datenbits durch synthetisch generierte Amplitudenwerte ersetzt. Es werden also anstelle der ursprünglichen Flanken der Datenbits solche Amplitudenwerte eingesetzt, die eine neue Flanke formen. Dabei sind die Amplitudenwerte, die die neue Flanke formen, so ausgestaltet, daß sie vorgegebene Taktraster bzw. Bandbreitenbeschränkungen einhalten.

Je nach Datenformat, nach Datenrate, nach Datentakt und nach vorgegebenen Bandbreitenbeschränkungen können die Amplitudenwerte dabei so ausgelegt werden, daß sie diese Randbedingungen einhalten.

Auf diese Weise können verschiedene Daten mit verschiedenen Randbedingungen in das digitale Bildsignal eingefügt werden. Es ist eine individuelle Anpassung an die vorgegebenen Bandbreitenbeschränkungen wie auch an die einzufügenden Daten gegeben.

Für eine Ausgestaltung dieses erfindungsgemäßen Verfahrens ist vorgesehen, daß die Flanken der Datenbits durch Amplitudenwerte ersetzt werden, welche wenigstens Teile einer Sinus-Schwingung bilden, und daß die Einfügung der aus den Amplitudenwerten aufgebauten Flanken in einem vorgebbaren, konstanten Taktraster stattfindet.

Die neu einzufügenden Amplitudenwerte, die wenigstens Teile der Flanken der ursprünglichen Datenbits ersetzen, können vorteilhaft eine Sinus-Schwingung formen, welche für eine vorgegebene Anstiegszeit und damit vorgegebene Bandbreitenbeschränkung optimal ist. Um diese neu einzufügenden Flanken in dem gewünschten Taktraster einzufügen, werden die Amplituden in einem vorgebbaren, konstanten Taktraster beispielsweise aus einem Speicher ausgelesen und in das Datensignal so eingefügt, daß sie Teile, insbesondere Flanken, des ursprünglichen Datensignals ersetzen. Es ergibt sich damit eine sichere Einhaltung der Bandbreitenbeschränkungen sowie eines gegebenenfalls vorgegebenen Taktrasters.

Gemäß einer weiteren Ausgestaltung des erfindungsgemäßen Verfahrens ist vorgesehen, daß das gesamte Datensignal durch synthetisch erzeugte Amplitudenwerte ersetzt wird.

Vorteilhafterweise kann das gesamte Datensignal, also alle Bits des Datensignals, durch synthetisch erzeugte Amplitudenwerte ersetzt werden. Damit wird erreicht, daß nicht nur die Flanken, sondern das gesamte, in das digitale Bildsignal eingefügte Datensignal Normungsvorschriften bezüglich Bandbreitenbeschränkungen, aber auch Normpegeln etc. einhält.

Im Ergebnis wird dabei also das gesamte ursprüngliche Datensignal durch ein neues Signal ersetzt, welches aus den Amplitudenwerten besteht, die die Flanken und gegebenenfalls auch die übrigen Bereiche des einzufügenden Signales bilden.

Die Bits des ursprünglichen Datensignals (bzw. der Datensignale) werden wenigstens teilweise durch Amplitudenwerte ersetzt, die in einem Speicher abgelegt sind und zuvor synthetisch erzeugt worden sind. Wenigstens Teile der Flanken der ursprünglichen Datenbits werden durch die Amplitudenwerte ersetzt. Die neu eingesetzten Amplitudenwerte formen Flanken, die die für die eingefügten Datenbits gegebenenfalls vorgegebenen Bandbreitenbeschränkungen und weitere Vorschriften einhalten, die gegebenenfalls auch für das Datensignal nach dessen Umsetzung in den analogen Bereich gelten.

Das Auslesen der Amplitudenwerte, die in das digitale Datensignal eingefügt werden, geschieht in Abhängigkeit des Ausgangssignals eines Discrete Time Oszillators. Ein derartiger Discrete Time Oszillator summiert mit jedem Systemtakt die neu eintreffenden Inkrement-Daten zu der vorher gebildeten Summe auf. Es wird also mit jedem Systemtakt die in dem Discrete Time Oszillator erzeugte Summe, die ausgangsseitig als Ausgangssignal zur Verfügung steht, um das eingangsseitig zugeführte Inkrement erhöht (oder erniedrigt). Die Veränderung der Ausgangswerte des Discrete Time Oszillator hängt einerseits von dem Systemtakt und andererseits von dem ihm eingangsseitig zugeführten Inkrement ab. Damit gestattet es ein solcher Discrete Time Oszillator, ausgangsseitig ein Signal zur Verfügung zu stellen, dessen Datenwerte einen Takt vorgeben, der nicht in einem ganzzahligen Verhältnis zu dem Systemtakt, mit dem der Discrete Time Oszillator getaktet wird, steht. Diese Eigenschaft des Discrete Time Oszillator ist für den digitalen Daten-Kodierer von besonderem Vorteil, da auf diese Weise das Taktraster, mit dem die Amplitudenwerte geformt werdne, unabhängig vom Systemtakt ist bzw. nicht in einem ganzzahligen Verhältnis mit diesem Takt stehen muß.

Durch Veränderung des Inkrements, das dem Discrete Time Osillator eingangsseitig zugeführt wird, kann dieses Taktraster, das in den Werten des Ausgangssignals des Discrete Time Oszillators enthalten ist, individuellen Anforderungen angepaßt werden. So kann das Inkrement für verschiedene Bandbreitenbeschränkungen verschiedener Daten verschiedene Datensignale verändert werden, so daß der erfindungsgemäße digitale Daten-Encoder in der Lage ist, verschiedene Daten aus verschiedenen Datensignalen mit verschieden geformten bzw. verschieden steilen Flanken als neu kodiertes Datensignal ausgangsseitig zur Verfügung zu stellen.

Da der Discrete Time Oszillator, wie oben erläutert, mit jedem Systemtakt zu der vorher gebildeten Summe das ihm zugeführte Inkrement neu aufsummiert, erhöht sich sein Wert ständig, so daß, je nach Wortbreite, irgendwann ein Überlauf eintritt. Dieser Überlauf markiert mit geringen Abweichungen, die durch den Überlaufrest bestimmt werden, diejenigen Zeitpunkte, zu denen im gewünschten Taktraster eine ansteigende oder abfallende Flanke in das Datensignal durch Einfügen der abgespeicherten Amplitudenwerte eingesetzt wird. Die Höhe des dem Discrete Time Oszillators zugeführten Inkrement-Wertes bestimmt dabei, in welchen zeitlichen Abständen diese Überläufe der Werte des Discrete Time Oszillators auftreten. Die Größe des Inkrement-Wertes hat auch darauf Einfluß, wie stark sich die Ausgangswerte des Discrete Time Oszillators mit jedem Systemtakt ändern. Infolge dessen bestimmt der Inkrement-Wert auch, welche Amplitudenwerte aus dem Speicher ausgelesen werden und damit den aktuellen Punkt auf der in das Datensignal eingesetzten Flanken.

Damit ist eine optimale Anpassung an verschiedene Anforderungen einerseits der Datensignale, die mit verschiedenen Taktrastern vorliegen, und andererseits der für das kodierte Datensignal vorgegebenen Bandbreitenbeschränkungen möglich. Alle diese Forderungen können mit einem relativ einfach aufgebauten digitalen Daten-Encoder verwirklicht werden, der für alle Datenformate geeignet ist. Selbst eine Anpassung des Daten-Kodierers an veränderte Anforderungen oder zusätzliche Anforderungen ist leicht möglich, da nur die Inkrementwerte des Discrete Time Oszillators entsprechend angepaßt werden müssen. Es sind hierzu keine Schaltungsänderungen erforderlich.

Die aus den Amplitudenwerten geformten Flanken werden nur zu durch den Discrete Time Oszillator vorgegebenen Zeitpunkten eingesetzt, vorzugsweise, wenn ein Überlauf des Discrete Time Oszillators eintritt.

Der Discrete Time Oszillator gibt ausgangsseitig ein sich mit jedem Systemtakt, mit dem er getaktet ist, änderndes Ausgangssignal zur Verfügung, das eine linear ansteigende (oder abfallende) Flanke darstellt. In Abhängigkeit dieser Flanke werden die Amplitudenwerte aus einem Speicher ausgelesen und zur Formung der Flanken eingesetzt.

Gegebenenfalls müssen diese Flanken in einem vorgegebenen Taktraster erzeugt werden. Hierzu kann der Überlauf des Discrete Time Oszillators eingesetzt werden. Dieser Überlauf tritt in Abhängigkeit des Systemtaktes und der dem Discrete Time Oszillator eingangsseitig zugeführten Inkrementwerte zu vorgebbaren Abständen ein. Diese Werte können dabei so gewählt werden, daß der Überlauf mit dem gewünschten Taktraster synchronisiert ist. Damit kann durch Wahl dieser Werte erreicht werden, daß die neu erzeugten Flanken in dem Taktraster generiert werden.

Gemäß einer weiteren Ausgestaltung des erfindungsgemäßen Kodierers ist vorgesehen, daß in dem Speicher synthetisch erzeugte Amplitudenwerte abgelegt sind, welche wenigstens Teile einer Sinus-Schwingung formen. Die in dem Speicher abgelegten Amplitudenwerte können vorzugsweise eine Sinus-Schwingung formen, welche anstelle der ursprünglichen Flanken der Datenbits als kodiertes Datensignal ausgegeben wird.

Vorteilhaft kann aber auch, wie gemäß einer weiteren Ausgestaltung der Erfindung vorgesehen ist, das gesamte Datensignal durch in dem Speicher abgelegte, synthetisch erzeugte Amplitudenwerte ersetzt werden. Hierdurch wird sichergestellt, daß das Datensignal bezüglich aller Anforderungen, beispielsweise auch Amplitudenanforderungen, den Sollwerten entspricht.

Gemäß einer weiteren Ausgestaltung des erfindungsgemäßen Daten-Kodierers ist vorgesehen, daß ein vom Ausgangssignal des Discrete Time Oszillators angesteuerter Adressen-Generator vorgesehen ist, in Abhängigkeit von dessen Ausgangssignal die in dem Speicher abgelegten Amplitudenwerte adressiert werden.

Wie oben beschrieben, stellen die Werte des Ausgangssignals des Discrete Time Oszillators eine ansteigende oder abfallende Flanke dar. Diese Werte können dazu eingesetzt werden, einen Adressen-Generator anzusteuern, der seinerseits die jeweils erforderlichen Amplitudenwerte in einem Speicher ansteuert und deren Auslesen aus dem Speicher auslöst. Damit wird in Abhängigkeit des Ausgangssignals des Discrete Time Oszillators ein Auslösen von Amplitudenwerten aus dem Speicher vorgenommen, die die neu gebildete Flanke formen.

Gemäß einer weiteren Ausgestaltung der Erfindung ist vorgesehen, daß der nach jedem Überlauf des Discrete Time Oszillators auftretende Divisions-Rest bei in dem Datensignal auftretender Flanke denjenigen in dem Speicher abgelegten Amplitudenwert bestimmt, mit dem beginnend gegebenenfalls eine im dem Datensignal auftretende Flanke aus den synthetisch generierten Amplitudenwerten geformt wird.

Wie oben bereits beschrieben wurde, wird der Discrete Time Oszillator vorteilhaft so ausgelegt, daß er in Abhängigkeit des Systemtaktes und des ihm eingangsseitig zugeführten Inkrementes sein Ausgangssignal so lange kontinuierlich verändert, bis ein Überlauf eintritt, der zu Zeitpunkten entsprechend eines gewünschten Taktrasters auftritt. Hierbei tritt jedoch nach dem Überlauf ein "Rest" in dem Discrete Time Oszillator auf, der verschiedene Größe hat. Dieser Rest gibt an, inwieweit der Überlauf-Zeitpunkt von dem gewünschten Taktraster abweicht. Hierbei handelt es sich um geringe Abweichungen, die in dem digitalen Encoder zusätzlich berücksichtigt werden können, indem dieser Divisions-Rest, der nach einem Überlauf in dem Discrete Time Oszillator Ausgangssignal auftritt, dazu eingesetzt wird, denjenigen Teil der Flanke zu bestimmen, mit dem bei der Generierung der einzufügenden Flanke begonnen wird. Damit wird berücksichtigt, daß der Überlauf nicht exakt in dem Taktraster erfolgt ist, sondern zu einem abweichenden Zeitpunkt, dessen Wert von dem Überlaufwert angegeben wird.

Es wird also eine neue Flanke nicht immer unbedingt mit dem ersten Amplitudenwert geformt, der normalerweise für eine Flanke vorgesehen ist. Gegebenenfalls kann die Flanke auch mit einem früheren oder späteren Amplitudenwert begonnen werden. Wird die Flanke mit einem späteren Amplitudenwert begonnen, so werden die davorliegenden Amplitudenwerte weggelassen. Im Ergebnis wird damit erreicht, daß der 50%-Wert der Flanke immer zu den vorgegebenen Taktzeitpunkten auftritt.

Gemäß einer weiteren Ausgestaltung des erfindungsgemäßen Daten-Kodierers ist vorgesehen, daß der Discrete Time Oszillator bei jedem Auftreten eines Überlaufs der Amplitudenwerte ein Request-Signal abgibt, mittels welchem Daten aus dem Datensignal und damit einer Datenquelle angefordert werden.

Wie oben bereits erläutert wurde, kann der Discrete Time Oszillator bzw. das ihm zugeführte Inkrement-Signal so ausgelegt sein, daß die Erzeugung neuer Flanken in Abhängigkeit des Datensignals entsprechend einem vorgegebenen Taktraster erfolgt. Damit die Datenbits des ursprünglichen Datensignals zu diesen Zeitpunkten zur Verfügung stehen, ist der Discrete Time Oszillator vorteilhaft so ausgelegt, daß er zu den Zeitpunkten, zu denen seine Werte überlaufen, ein Request-Signal abgibt, mit dem neue Daten angefordert werden. Somit stehen zu den Zeitpunkten entsprechend dem Taktraster neue Daten zur Verfügung, deren Flanken geformt werden.

Ein wesentlicher Vorteil des erfindungsgemäßen Daten-Kodierers besteht darin, daß er leicht auf verschiedene Datenraten bzw. vorgegebene Bandbreitenbeschränkungen des kodierten Signals einstellbar ist. Dies kann auf einfache Weise durch Veränderung des Inkrementwertes vorgenommen werden, der dem Discrete Time Oszillator zugeführt wird. Durch Änderung der Größe des Inkrementwertes kann bestimmt werden, mit welchem Taktraster die Amplitudenwerte aus dem Speicher ausgelesen werden. Damit wird im Ergebnis eine Veränderung der Steilheit der geformten Flanken vorgenommen.

Gemäß einer weiteren Ausgestaltung der Erfindung ist vorgesehen, daß der Discrete Time Oszillator zu Beginn jeder Bildzeile des digitalen Bildsignals zurückgesetzt wird.

Um gegebenenfalls auftretende geringe Abweichungen zwischen den Überlaufzeitpunkten des Discrete Time Oszillators und dem vorgegebenen Taktraster zu minimieren, wird der Discrete Time Oszillator vorteilhaft zu Beginn jeder Bildzeile des digitalen Bildsignals auf einen Anfangswert zurückgesetzt. Damit wird erreicht, daß ein gegebenenfalls vorliegende geringfügiges Auseinanderlaufen dieser Taktraster mit Beginn jeder Bildzeile zurückgesetzt wird und somit nicht ins Gewicht fallende Werte erreicht.

Gemäß einer weiteren Ausgestaltung der Erfindung ist für den Daten-Kodierer vorgesehen, daß ein Flanken- und Amplitudendetektor vorgesehen ist, in Abhängigkeit von dessen Ausgangssignal der Adressen-Generator auf dem Signalverlauf der Datenbits des Datensignals zugeordnete, in dem Speicher abgelegte Amplitudenwerte zugreift.

Wie oben bereits erläutert wurde, werden wenigstens Teile der Flanken, im Extremfall aber auch das gesamte Datensignal durch ein neues Signal ersetzt, das das kodierte Signal darstellt und das aus Amplitudenwerten geformt wird. Zur Bestimmung derjenigen Amplitudenwerte, die aus dem Speicher in Abhängigkeit des ausgangssignals des Discrete Time Oszillators ausgelesen werden, ist vorteilhaft ein Flanken- und Amplitudendetektor vorgesehen, welcher erkennt, ob in dem ursprünglichen, zu kodierenden Datensignal eine ansteigende Flanke, eine abfallende Flanke, ein Wert "Null" oder Wert "Eins" vorliegt, der zu kodieren ist und der durch neue Amplitudenwerte zu ersetzen ist.

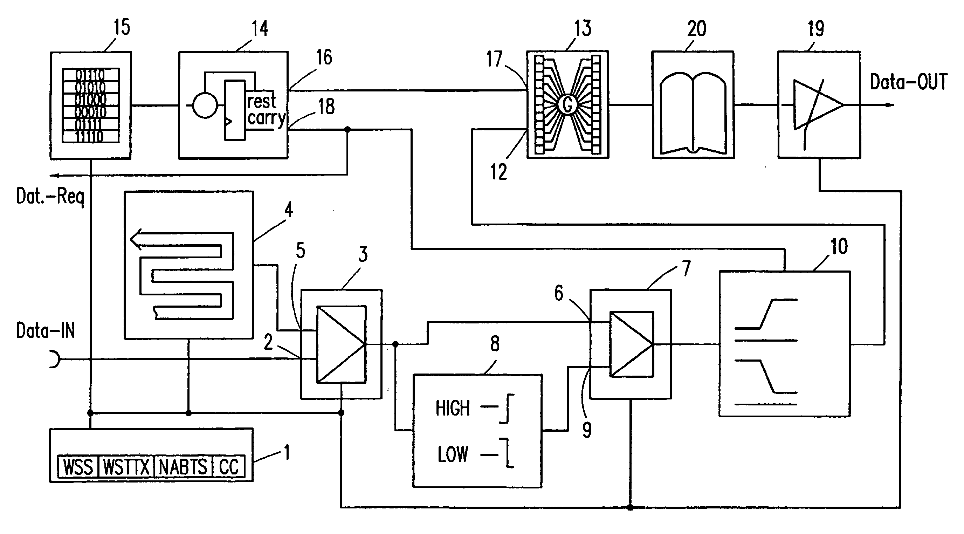

Nachfolgend wird anhand der Zeichnung ein digitaler Daten-Encoder näher erläutert, der gemäß der Erfindung arbeitet.

In der einzigen Figur ist in Form eines Blockschaltbildes ein digitaler Daten-Kodierer dargestellt, dem eingangsseitig Daten gegebenenfalls verschiedener Datensignale zugeführt werden. Diese Daten sind in der Figur mit Data-IN gekennzeichnet. Diese Daten verschiedener Datensignale weisen im allgemeinen verschiedene Taktraten auf. An die zu kodierenden Daten werden daher auch verschiedene Bandbreitenbeschränkungen gestellt.

Zur Anpassung des Daten-Kodierers an derartige differierende Anforderungen ist ein Datenart-Register 1 vorgesehen, welches den Daten-Encoder an verschiedene Datenraten bzw. verschiedene vorgegebene Bandbreitenbeschränkungen anpaßt.

Bei den Eingangsdaten "Data-IN" kann es sich beispielsweise um Videotext-Daten (Teletext-Daten) verschiedener Datenformate, um Wide Screen Signalling Daten, mit denen das Seiten-Höhen-Verhältnis des Bildsignals signalisiert wird, oder um Closed Captioning Daten, die Teletext-Daten ähneln, handeln.

In dem in der Figur dargestellten Daten-Encoder gelangen diese extern zugeführten Daten an einen ersten Eingang 2 eines ersten Multiplexers 3.

Es kann gegebenenfalls ein Datenspeicher 4 vorgesehen sein, in dem Teile dieser Daten, die bekanntes, vorgegebenes Format haben, wie beispielsweise die Wide Screen Signalling Daten, abgelegt sind. In diesem Falle werden die Daten aus dem Datenspeicher 4, ausgelöst durch das Datenart-Register 1, ausgelesen und müssen nicht als externe Daten zugeführt werden.

In Abhängigkeit davon, ob extern zugeführte Daten vorliegen oder ob Daten aus dem Daten-Register 4 kodiert werden sollen, steuert das Datenart-Register 1 den Multiplexer 3 so, daß er entweder auf seinen ersten Eingang 2 geschaltet wird, an dem die externen Daten anliegen, oder daß der Multiplexer 3 auf einen zweiten Eingang 5 geschaltet wird, an dem ihm die aus dem Datenspeicher 4 ausgelesenen Daten zugeführt werden. Damit liegen am Ausgang des Multiplexers 3 die zu kodierenden Daten vor.

Diese Daten werden einem ersten Eingang 6 eines zweiten Multiplexers 7 zugeführt. Es ist ferner ein Kodierer 8 vorgesehen, dem ebenfalls die Ausgangsdaten des ersten Multiplexers 3 zugeführt werden und der gegebenenfalls eine Umkodierung der Daten vornimmt. So kann beispielsweise ein ursprünglicher Wert "Eins" des Datensignals in eine Low-High-Flanke umgesetzt werden. In entsprechender Weise wird ein Datenwert "Null" entsprechen Low in eine High-Low-Flanke umgesetzt. Die Ausgangswerte dieses Kodierers gelangen auf einen zweiten Eingang 9 des zweiten Multiplexers 7. Der Kodierer 8 ist optional und nur dann erforderlich, wenn eine derartige Umkodierung gewünscht wird. Der zweite Multiplexer 7 wird ebenfalls von dem Datenart-Register 1 angesteuert.

Dem zweiten Multiplexer 7 ist ein Flanken- und Amplituden-Detektor 10 nachgeschaltet, welcher detektiert, ob das ihm zugeführte Datensignal den Wert "Null" entsprechend Low, den Wert "Eins" entsprechend High oder eine positive oder negative Flanke aufweist. Das Ausgangssignal, das dieses signalisiert, wird an einen zweiten Eingang 12 eines Adressengenerators 13 gegeben.

In dem in der Figur dargestellten Daten-Kodierer, ist ein Discrete Time Oszillator 14 vorgesehen. Ein derartiger Discrete Time Oszillator summiert einen ihm eingangsseitig mit jedem Systemtakt zugeführten Inkrement-Wert auf eine zuvor gebildete Summe auf. Mit jedem neuen Systemtakt wird die Summe um den eingangsseitig zugeführten Inkrement-Wert erhöht. Dieser Vorgang wiederholt sich so lange, bis ein maximaler Wert erreicht wird und ein Überlauf der Werte in dem Discrete Time Oszillator eintritt. Bei diesem Überlauf verbleibt ein Restwert in dem Discrete Time Oszillator, der ebenfalls als Ausgangssignal ausgegeben wird. Damit bilden die Ausgangswerte des Discrete Time Oszillators während des Zählens sich mit jedem Systemtakt um das Inkrement verändernde Ausgangswerte, die sich so lange kontinuierlich mit jedem Systemtakt verändern, bis der Überlauf eintritt. Nach dem Überlauf wird beginnend mit dem Überlaufrest die Aufsummierung der Inkrement-Werte mit jedem Systemtakt fortgeführt. Im Ergebnis formen die Werte des Ausgangssignals des Discrete Time Oszillators eine Art Sägezahnsignal, das bei jedem Überlauf von dem Maximum-Wert auf den Überlaufwert nahe einem Minimum zurückspringt und zwischen diesen Werten eine ansteigende Flanke formt.

Dem Discrete Time Oszillator 14 wird eingangsseitig ein Inkrement-Wert von einem Inkrement-Wertgeber 15 zugeführt. Der Discrete Time Oszillator 14 summiert mit jedem Systemtakt, der in der Figur nicht angedeutet ist, einen weiteren Inkrement-Wert auf die zuvor gebildete Summe auf.

Der Inkrement-Wert, der von dem Inkrement-Wertgeber 15 geliefert wird, ist variabel und wird von dem Datenart-Register 1 eingestellt. Damit kann der Inkrement-Wert an das Taktraster des zu kodierenden Datensignals angepaßt werden.

Der Discrete Time Oszillator 14 liefert an einem ersten Ausgang 16 dasjenige Ausgangssignal, das in oben beschriebener Weise eine Art Sägezahnsignal formt. Dieses Signal wird einem ersten Eingang 17 des Adressengenerators 13 zugeführt.

An einem zweiten Ausgang 18 des Discrete Time Oszillators 14 liefert dieser dann ein Signal, wenn ein Überlauf eintritt. Damit wird einerseits an externe, in der Figur nicht dargestellte Schaltungsanordnungen signalisiert, daß ein neues Datenbit zur Kodierung angeliefert werden soll. Dieses Signal ist in der Figur mit Dat.-Req (Data-Request) gekennzeichnet. Ferner wird dieses Signal dem Flanken- und Amplituden-Detektor 10 zugeführt, der zu den Zeitpunkten, zu denen dieses Signal auftritt, an den Adressengenerator 13 signalisiert, welche Form das zu kodierende Datensignal aufweist.

An dem ersten Ausgang 16 des Discrete Time Oszillators 14 zur Verfügung gestellten Ausgangssignal verändern sich die Werte dieses Signals in oben erläuterter Weise zwischen zwei in dem Discrete Time Oszillator 14 auftretenden Überläufen in der Weise, daß eine ansteigende (oder abfallende) Flanke gebildet wird. Die Amplitudenwerte verändern sich mit jedem Systemtakt um den von dem Inkrement-Geber 15 gelieferten Inkrement-Wert. Dieses Ausgangssignal wird von dem Adressengenerator 13 in Adressen umgeformt, welche in einem Speicher 20 adressiert werden. In dem Speicher 20 sind Amplitudenwerte abgelegt, die wenigstens Teile von Signalflanken formen. Dabei handelt es sich vorzugsweise um Amplitudenwerte, die wenigstens Teile einer Sinus-Schwingung bilden. Von dem Flanken- und Amplituden-Detektor 10 wird dabei signalisiert, ob es sich um eine ansteigende oder abfallende Flanke handelt. Gegebenenfalls kann der Daten-Kodierer auch so ausgelegt sein, daß das gesamte eingangsseitig zugeführte und zu kodierende Datensignal durch neue Amplitudenwerte ersetzt wird. In diesem Falle werden auch Low-Werte oder High-Werte durch neue Amplitudenwerte aus dem Speicher 18 ersetzt.

Dem Speicher 20 ist ein Verstärker 19 nachgeschaltet, welcher einen variablen Verstärkungsfaktor aufweist, der gegebenenfalls an verschiedene Pegelanforderungen des kodierten Datensignals angepaßt werden kann. Die Einstellung der variablen Verstärkung wird dabei in Abhängigkeit der Art des Datensignals von dem Datenart-Register 1 vorgenommen.

Der Verstärker 19 liefert ausgangsseitig das kodierte Datensignal, das in der Figur mit Data-OUT gekennzeichnet ist. Dieses Signal stellt ein Datensignal dar, das in Abhängigkeit des eingangsseitig zugeführten Datensignals oder des aus dem Datenspeicher 4 ausgelesenen Datensignals gebildet wurde, das jedoch teilweise tatsächlich aus Amplitudenwerten aufgebaut ist, die aus dem Speicher 18 ausgelesen wurden. Damit kann dieses Datensignal in gewünschter Weise geformt werden.

Je nach Art der Daten, die eingangsseitig als Data-IN zugeführt werden oder die aus dem Datenregister 4 ausgelesen werden, wird das Datenregister entsprechend gesetzt. Dieses wiederum signalisiert die Datenart an das Inkrement-Register 15, das einen entsprechenden Inkrement-Wert einstellt, der der Datenart bzw. dem Daten-Taktraster zugeordnet ist. Der Discrete Time Oszillator 14 arbeitet mit diesem Inkrement-Wert. Je nach größe des Inkrement-Wertes verändern sich auch die Ausgangswerte des Discrete Time Oszillators mit Schritten entsprechend dem Inkrement-Wert. In Abhängigkeit dieses Signals wiederum wird mittels des Adressengenerators 13 ein Auslesen der neuen Amplitudenwerten aus dem Speicher 20 vorgenommen. Damit kann durch den Inkrement-Wert eingestellt werden, wie schnell beispielsweise eine in dem Speicher 18 abgelegte Flanke eines Sinus-Signals ausgelesen wird. Damit wird im Ergebnis erreicht, daß diese Flanke aus Amplitudenwerten geformt wird, die mehr oder weniger schnell ausgelesen werden. Durch dieses langsamere oder schnellere Auslesen wird erreicht, daß die Flanke in flacherer oder steilerer Form generiert wird.

Durch die Größe des Inkrement-Wertes wird auch bestimmt, zu welchen Zeitpunkten ein Überlauf der Werte des Discrete Time Oszillators eintritt. Da diese Überlauf-Zeitpunkte diejenigen Zeitpunkte angeben, zu denen Flanken in das Datensignal aus den Amplitudenwerten, die aus dem Speicher ausgelesen werden, eingefügt werden, bestimmt der Inkrement-Wert auch das Taktraster des kodierten Datensignals, also die zeitlichen Abstände, in denen die Flanken in dem kodierten Datensignal auftreten.

Damit kann der Daten-Kodierer nur durch Änderung der Inkrement-Werte, die dem Discrete Time Oszillator 14 zugeführt werden, an verschiedene Datenraten angepaßt werden. Ferner kann durch die Anpassung der Inkrement-Werte eine Veränderung der Steilheit der erzeugten Flanken vorgenommen werden.

Damit ist einerseits eine Anpassung an verschiedene Datensignale durch einfaches Umschalten des Datenregisters 1 möglich. Ferner ist auch eine Anpassung an neue Datenformate möglich, da hierfür nur die in dem Datenregister 1 und dem Inkrement-Register 15 abgelegten Daten anzupassen sind. Dies gestattet einen äußerst flexiblen Einsatz des Daten-Kodierers.

## Patentansprüche

1. Digitaler Daten-Kodierer zur Kodierung von Daten beliebiger Datenrate wenigstens eines Datensignals zur gemeinsamen Übertragung der kodierten Daten mit einem digitalen Bildsignal, **dadurch gekennzeichnet,**
- **daß** ein Discrete Time Oszillator vorgesehen ist, in Abhängigkeit von dessen Ausgangssignal in der Weise auf in einem Speicher abgelegte synthetisch generierte Amplitudenwerte zugegriffen wird, daß wenigstens Teile der Flanken von Datenbits des Datensignals durch synthetisch generierte Amplitudenwerte ersetzt werden, welche Flanken formen, die für die kodierten Datenbits vorgegebene Bandbreitenbeschränkungen einhalten,
- **daß** die aus den Amplitudenwerten geformten Flanken nur zu durch den Discrete Time Oszillator vorgegebenen Zeitpunkten eingesetzt werden, vorzugsweise, wenn ein Überlauf des Discrete Time Oszillators eintritt, und
- **daß** dem Discrete Time Oszillator ein Inkrement-Signal zugeführt wird, dessen Größe zur Anpassung an das Taktraster des Datensignals und zur Anpassung der Bandbreite der aus den synthetisch erzeugten Amplitudenwerten geformten Flanken an vorgegebene Bandbreitenbeschränkungen veränderbar ist.

2. Digitaler Daten-Kodierer nach Anspruch 1, **dadurch gekennzeichnet,**
**daß** in dem Speicher synthetisch erzeugte Amplitudenwerte abgelegt sind, welche wenigstens Teile einer Sinus-Schwingung formen.

3. Digitaler Daten-Kodierer nach einem der Ansprüche 1 oder 2, **dadurch gekennzeichnet, daß** das gesamte Datensignal durch in dem Speicher abgelegte synthetisch erzeugte Amplitudenwerte ersetzt wird.

4. Digitaler Daten-Kodierer nach einem der Ansprüche 1 bis 3, **dadurch gekennzeichnet,**
**daß** ein vom Ausgangssignal des Discrete Time Oszillators angesteuerter Adressen-Generator vorgesehen ist, in Abhängigkeit von dessen Ausgangssignal die in dem Speicher abgelegten Amplitudenwerte adressiert werden.

5. Digitaler Daten-Kodierer nach einem der Ansprüche 1 bis 4, **dadurch gekennzeichnet,**
**daß** der nach jedem Überlauf des Discrete Time Oszillators auftretende Divisions-Rest bei in dem Datensignal auftretender Flanke denjenigen in dem Speicher abgelegten Amplitudenwert bestimmt, mit dem beginnend gegebenenfalls eine im dem Datensignal auftretende Flanke aus den synthetisch generierten Amplitudenwerten geformt wird.

6. Digitaler Daten-Kodierer nach einem der Ansprüche 1 bis 5, **dadurch gekennzeichnet,**
**daß** der Discrete Time Oszillator bei jedem Auftreten eines Überlaufs der Amplitudenwerte eine Request-Signal abgibt, mittels welchem Daten von einer Datenquelle angefordert werden.

7. Digitaler Daten-Kodierer nach einem der Ansprüche 1 bis 6, **dadurch gekennzeichnet, daß** der Discrete Time Oszillator zu Beginn jeder Bildzeile des digitalen Bildsignals zurückgesetzt wird.

8. Digitaler Daten-Kodierer nach einem der Ansprüche 1 bis 7, **dadurch gekennzeichnet, daß** ein Flanken- und Amplitudendetektor vorgesehen ist, in Abhängigkeit von dessen Ausgangssignal der Adressen-Generator auf dem Signalverlauf der Datenbits des Datensignals zugeordnete, in dem Speicher abgelegte Amplitudenwerte zugreift.

## Claims

1. A digital data encoder for encoding data of arbitrary data rates of at least one data signal for jointly transmitting the encoded data with a digital picture signal, **characterized in that**
- a discrete time oscillator is provided, in dependence upon whose output signal synthetically generated amplitude values stored in a memory are accessed in such a way that at least parts of the edges of data bits of the data signal are replaced by synthetically generated amplitude values which constitute edges that are within bandwidth limitations predetermined for the encoded data bits
- the edges formed from the amplitude values are only used at instants predetermined by the discrete time oscillator, preferably when there is an overflow of the discrete time oscillator, and **in that**
- the discrete time oscillator is supplied with an increment signal whose magnitude can be changed to be adapted to the clock raster of the data signal and for the bandwidth of the edges formed from the synthetically generated amplitude values to be adapted to predefined bandwidth limitations.

2. A digital data encoder as claimed in claim 1, **characterized in that** synthetically generated amplitude values which constitute at least parts of a sine oscillation are stored in the memory.

3. A digital data encoder as claimed in any one of claim 1 or 2, **characterized in that** the overall data signal is replaced by synthetically generated amplitude values stored in the memory.

4. A digital data encoder as claimed in any one of claims 1 to 37, **characterized in that** an address generator driven by the output signal of the discrete time oscillator is provided, in dependence upon whose output signal the amplitude values stored in the memory are addressed.

5. A digital data encoder as claimed in any one of claims 1 to 4, **characterized in that** the division rest occurring after each overflow of the discrete time oscillator in the edge occurring in the data signal determines that amplitude value stored in the memory, starting with which value an edge occurring in the data signal may be formed from the synthetically generated amplitude values.

6. A digital data encoder as claimed in any one of claims 1 to 5, **characterized in that**, upon every occurrence of an overflow of the amplitude values, the discrete time oscillator supplies a request signal by means of which data are called forward from a data source.

7. A digital data encoder as claimed in any one of claims 1 to 6, **characterized in that** the discrete time oscillator is reset at the start of each picture line of the digital picture signal.

8. A digital data encoder as claimed in any one of claims 1 to 7, **characterized in that** an edge and amplitude detector is provided, in dependence upon whose output signal the address generator accesses amplitude values which are assigned to the signal variation of the data signal and which are stored in the memory.

## Revendications

1. Codeur de données numériques pour le codage de données pour n'importe quel débit de données au moins d'un signal de données pour la transmission commune des données codées avec un signal d'image numérique, **caractérisé**
- **en ce qu'**il est prévu un oscillateur de temps discret, en fonction du signal de sortie duquel il est fait appel aux valeurs d'amplitude générées synthétiquement et mémorisées, et en ce qu'au moins des parties des flancs des bits de données du signal de données sont remplacées par des valeurs d'amplitude générées synthétiquement, qui forment des flancs qui contiennent des limites de largeurs de bande préétablies pour les bits de données codés,
- **en ce que** les flancs formés par les valeurs d'amplitude ne sont utilisés que pour les moments préétablis par l'oscillateur de temps discret, de préférence lorsqu'il se produit un trop-plein au niveau de l'oscillateur de temps discret, et
- **en ce qu'**un signal d'incrément est affecté à l'oscillateur de temps discret, signal dont la grandeur pourra être modifiée pour s'adapter à la grille de cadence du signal de données et pour l'adaptation de la largeur de bande des flancs formés à partir des valeurs d'amplitude générées synthétiquement pour les limitations de largeurs de bande préétablies.

2. Codeur de données numériques selon la revendication 1, **caractérisé en ce que**, dans la mémoire, sont enregistrées les valeurs d'amplitude générées synthétiquement qui forment au moins des parties d'une oscillation sinusoïdale.

3. Codeur de données numériques selon l'une des revendications 1 ou 2, **caractérisé en ce que** la totalité du signal de données est remplacée par des valeurs d'amplitude générées synthétiquement et mises en mémoire.

4. Codeur de données numériques selon l'une des revendications 1 à 3, **caractérisé en ce qu'**il est prévu un générateur d'adresses piloté par le signal de sortie de l'oscillateur de temps discret, en fonction duquel signal de sortie les valeurs d'amplitude mises dans la mémoire sont adressées.

5. Codeur de données numériques selon l'une des revendications 1 à 4, **caractérisé en ce que** le reste de division, produit après chaque trop-plein de l'oscillateur de temps discret avec lequel les flancs produits sur le signal de données sont ajustés à ceux de la valeur d'amplitude mise en mémoire, est formé avec les valeurs d'amplitude générées synthétiquement commençant éventuellement un flanc de signal de données.

6. Codeur de données numériques selon l'une des revendications 1 à 5, **caractérisé en ce que** l'oscillateur de temps discret, pour chaque survenue de trop-plein des valeurs d'amplitude, émet un signal de demande, au moyen duquel sont exigées les données par une source de données.

7. Codeur de données numériques selon l'une des revendications 1 à 6, **caractérisé en ce que** l'oscillateur de temps discret est réinitialisé au début de chaque ligne d'image du signal d'image numérique.

8. Codeur de données numériques selon l'une des revendications 1 à 7, **caractérisé en ce qu'**il est prévu un détecteur de flanc et d'amplitude, en fonction duquel signal de sortie est affecté le générateur d'adresses sur le tracé de signaux des bits de données du signal de données, en accédant aux valeurs d'amplitude mises en mémoire.
